# EUROPÄISCHE PATENTANMELDUNG

(11) **EP 1 116 765 A2**
(43) Veröffentlichungstag der Anmeldung: **18.07.2001**
(21) Anmeldenummer: 01100756.4
(22) Anmeldetag: 12.01.2001
(51) Int. Cl.: C09J 201/00, C09D 9/00

(54) **Klebeset**

(30) Priorität: 14.01.2000 EP 00100757; 14.01.2000 EP 00100758
(71) Anmelder: Erl Unisol GmbH i.G., 69436 Schönbrunn (DE)
(72) Erfinder: Reinecke, Horst, 68723 Schwetzingen (DE); Lange, Frank, 68161 Mannheim (DE)
(74) Vertreter: Schurack, Eduard F.

(57) **Zusammenfassung**

Die Erfindung betrifft ein Klebeset, das mindestens zwei Behältnisse (10, 14) mit Verschlußelementen (12, 16) aufweist, wobei mindestens ein Behältnis einen Klebstoff enthält und wobei mindestens ein weiteres Behältnis ein Klebstofflösemittel enthält.

## Beschreibung

Die Erfindung betrifft ein Klebeset mit einem Behältnis, das einen Klebstoff enthält.

Insbesondere in privaten Haushalten werden regelmäßig unterschiedliche Klebstoffe eingesetzt. Dabei versteht man unter Klebstoffen nicht-metallische Werkstoffe, die Körper durch Oberflächenhaftung (Adhäsion) und innere Festigkeit (Kohäsion) verbinden können. Die Klebstoffe bestehen aus Grundstoffen, meist natürlichen oder synthetischen organischen Polymeren, mit Zusätzen von Lösungsmitteln, Weichmachern, Füllstoffen, Streckmitteln, Härtern oder anderen, die Klebeeigenschaften oder das Abbinden beeinflussenden Stoffen. Zu den Grundstoffen gehören beispielsweise wasserlösliche natürliche oder synthetische Polymere, Naturkautschuk und synthetische Kautschuktypen wie Polychlorbutadien, thermoplastische Hochpolymere wie Nitrocellulose, Polyvinylazetat, Polyacryl- und Polymethacrylsäureester, Vinylchloridmischpolymere und nachchlorisiertes Polyvinylchlorid, Polyvinyläther und Polyvinylazetale. Weitere Grundstoffe stellen synthetische, meist härtbare Harze (Phenol- und Karbamin-Formaldehydharze, Epoxidharze, ungesättigte Polyesterharze, Polyurethane, Polysulfide, Silikone), Naturharze, Wachse und bituminöse Massen und anorganische Grundstoffe dar.

Zu unterscheiden sind sogenannte physikalisch abbindende Klebstoffe und Reaktionsklebstoffe bzw. chemisch abbindende Klebstoffe.

Als physikalisch abbindend werden Einkomponentenklebstoffe bezeichnet, die Lösungsmittel auf der Basis von organischen Chemikalien (Alkohole, Ester, Ketone oder Aromaten) oder Wasser enthalten. Die den eigentlichen Klebevorgang auslösenden Grundstoffe sind also in Lösungsmitteln gelöst, so daß die klebenden Grundstoffe als flüssige oder pastöse Masse verarbeitungsfähig sind. Der Klebevorgang wird beispielsweise durch Verdunstung der Lösungsmittel ausgelöst. Man unterscheidet Schmelzklebstoffe, Heißsiegelklebstoffe, Kontaktklebstoffe, Haftklebstoffe und Alleskleber. Die Schmelzklebstoffe werden heiß als Schmelze aufgetragen und bilden beim Erstarren die Klebverbindung. Verwendet werden u.a. Mischungen von Äthylen-Vinylazetat-Copolymeren mit Harzen und Wachsen. Die sogenannten Heißsiegelklebstoffe werden als Lösung oder Dispersionen aufgetragen. Die getrockneten Schichten schmelzen bei der Siegelung in der Wärme und bilden die Klebverbindung.

Die sogenannten Kontaktkleber müssen auf beide zu verklebende Oberflächen aufgetragen werden, und nach einer Vortrocknung erfolgt die Klebung durch kurzzeitiges, starkes Zusammendrücken. Hierfür werden beispielsweise Lösungen von Synthesekautschuk und Harzen verwendet. Unter Haftklebstoffen sind Dauerklebstoffe zu verstehen, die meist auf Kautschuk basieren und unter geringem Druck haften. Alleskleber sind u.a. Lösungen von Nitrozellulose, Polyvinylazetat in Estern und Ketonen, die durch Verdunstung des Lösungsmittels abbinden.

Zu den Reaktionsklebstoffen gehören die Cyanacrylatklebstoffe, auch Sekundenkleber genannt, und Zweikomponentenkleber, bestehend aus Bindern (Harze) und Härtern, die getrennt aufbewahrt werden. Die Harze können ungesättigte Polyesterharze, Vinyl-und Acrylverbindungen, Epoxid- und Polyurethanverbindungen und die Härter Peroxide der Harzkomponenten Benzoylperoxid, Polyamine oder Polyisocyanate sein, chemisch sehr aktive Verbindungen, die erst durch die Vermischung und Abbindung zu Polymeren vernetzen und somit den Klebevorgang vollziehen. Diese bilden dann einen hochwirksamen Kleber, der hohen Belastungen standhält.

Sekundenklebstoffe sind Einkomponentenprodukte auf der Basis von Cyanacrylaten. Man setzt dabei Methyl-, Ethyl- und Butylester der Cyanacrylsäure unter Zugabe von Weichmachern ein. Die Cyanacrylatklebstoffe härten sofort nach dem Auftragen mit Hilfe der Luftfeuchtigkeit aus. Der Cyanacrylatklebstoff ist heute einer der weitest verbreiteten Kleberarten im Privathaushalt und in der Industrie. Cyanacrylatklebstoff wird unter anderem sogar in der Zahntechnik verwendet. Seine hohe Klebekraft, die er in kürzester Zeit gewährleistet, hat ihn zu einem der beliebtesten Kleber seiner Zeit gemacht. Durch seine enorme Klebekraft besitzt er allgemein den Ruf, sehr fest und vor allem unlöslich zu sein.

Nicht gelungene Verklebungen führen jedoch oft zum Verlust der zu verklebenden Teile oder resultieren in störenden Klebstoffresten auf den zu verklebenden Teilen oder versehentlich benetzten Gegenständen. Gerade in privaten Haushalten ist oft nicht schnell genug ein geeignetes Klebstofflösemittel zur Hand.

Diese Probleme tauchen insbesondere bei der Benutzung des Cyanacrylatklebstoffs auf, da dieser Klebstoff extrem schnell polymerisiert und sich der polymere Cyanacrylatklebstoff nicht mit den üblicherweise in einem Haushalt vorhandenen Lösungsmitteln ablösen läßt. Besonders mit dem Cyanacrylatklebstoff kontaminierte Hautoberflächen stellen eine ernst zu nehmende Gefahr dar. In vielen Fällen müssen verklebte Hautteile sogar chirurgisch getrennt werden. Polymere Rückstande wurden bisher abgeschliffen oder mit dem der Allgemeinheit schwer zugänglichen und für empfindliche Werkstoffe ungeeignetem Lösungsmittel Aceton (Dimethylketon) entfernt. Aceton ist als Drogenhilfsmittel bekannt und daher der breiten Masse von Anwendern nicht zugänglich. Auch aufgrund seines hohen Dampfdrucks und seiner Brennbarkeit stellt das Aceton ein Gefahrengut bei Lagerung, Abfüllung und Transport dar. Weiterhin nachteilig ist, daß der hohe Dampfdruck des Acetons zu einem sehr hohen Verbrauch beim Lösevorgang führt. Von überaus großem Nachteil ist auch, daß nur eine beschränkte Anzahl von Materialien gegenüber Aceton beständig ist.

Zur Entfernung von Klebstoff von Textilien oder beispielsweise Plexiglas ist Aceton ungeeignet. Plexiglas, auch Acrylglas oder Polymethylmethacrylat genannt, ist ein äußerst beliebter Werkstoff, der überaus häufig in den unterschiedlichsten Bereichen eingesetzt wird. Es handelt sich hierbei jedoch, wie bereits erwähnt, um einen sehr empfindlichen Kunststoff, der bisher meist mit Lösungen auf wässriger Basis gereinigt wird. Verunreinigungen, die nicht durch diese Lösungen entfernt werden können, sind nur auf mechanischem Wege zu beseitigen.

Viele Klebstoffe entfalten nur dann ihre volle Klebekraft, wenn die zu verklebenden Teile vorher gründlich gereinigt werden. In vielen privaten Haushaltung ist jedoch kein Reinigungsmittel zur Hand, daß diesen Zweck in befriedigender Art und Weise erfüllen würde, so daß die Verklebung häufig aus diesem Grunde nicht zu dem gewünschten dauerhaften Ergebnis führt.

Aufgabe der vorliegenden Erfindung ist es daher, insbesondere für private Haushalte eine Möglichkeit bereitzustellen, bei der zurückbleibende Klebstoffflecken und dauerhafte ungewollte Verklebungen bei der Verwendung eines Klebstoffs vermieden werden und außerdem eine bessere Wirkung des Klebstoffs erzielt und auf diese Weise der Klebevorgang erleichtert wird.

Diese Aufgabe wird gelöst durch ein Klebeset, das mindestens zwei Behältnisse mit Verschlußelementen aufweist, wobei mindestens ein Behältnis einen Klebstoff enthält und wobei mindestens ein weiteres Behältnis ein Klebstofflösemittel enthält. Mit dem Klebstofflösemittel, das bei Verwendung des Klebstoffs sofort zur Hand ist, können fehlerhafte Verklebungen sofort gelöst und möglicherweise aufgetretene Klebstoffrückstände auf Haut, Gewebe, Holz, Metall oder Kunststoff sofort entfernt werden. Durch ein solches Klebeset ist es dem Benutzer eines Klebstoffs außerdem möglich, die zu verklebenden Oberflächen erst gründlich mit dem Klebstofflösemittel zu reinigen, um nach dem Abspülen der Oberflächen mit Wasser und Trocknung für die Verklebung besonders geeignete Oberflächen zu erhalten und so eine dauerhafte Wirkung des Klebstoffs zu erzielen.

Wie bereits aus den eingangs aufgeführten Arten von unterschiedlichsten Klebstoffen hervorgeht, kann nicht ein Klebstoff das gesamte Verwendungsspektrum abdecken. Eine besonders vorteilhafte Weiterbildung der Erfindung sieht daher vor, daß das Klebeset mindestens ein weiteres Behältnis aufweist, das mindestens einen weiteren Klebstoff enthält, so daß der Benutzer zwischen mindestens zwei verschiedenen Klebstoffarten wählen kann, die für unterschiedliche Verklebungen geeignet sein können.

In einer Ausgestaltung der Erfindung handelt es sich bei dem Klebstoff und/oder dem mindestens einen weiteren Klebstoff um einen Einkomponentenklebstoff. Dabei können alle Einkomponentenklebstoffe verwendet werden, die eingangs aufgeführt sind oder die sich von den oben aufgeführten Einkomponentenklebstoffen ableiten lassen.

Der Klebstoff und/oder der mindestens eine weitere Klebstoff kann ein physikalisch abbindender Klebstoff, insbesondere ein Leim oder ein Kleister oder ein Dispersionsklebstoff, oder ein chemisch abbindender Klebstoff, insbesondere ein Cyanacrylatklebstoff, sein. Da gerade der Umgang mit Cyanacrylatklebstoff häufig Schwierigkeiten bereitet, die durch das erfindungsgemäße Klebeset beseitigt werden können, weil hier ein entsprechendes Klebstofflösemittel unmittelbar zur Hand ist, ist ein Cyanacrylatklebstoff als Inhalt einer der Behältnisse besonders zweckmäßig.

In einer weiteren Ausgestaltung der Erfindung ist der Klebstoff und/oder der eine weitere Klebstoff mindestens eine Komponente eines Zweikomponentenklebstoffs. Geeignet ist jeder der eingangs aufgeführten Zweikomponentenklebstoffe und jeder daraus ableitbare Klebstoff. Dabei sei insbesondere hingewiesen auf Epoxidharze, die eine Polyadditionsreaktion eingehen und auf Aminoplast- und Phenoplastklebstoffe, die eine Polykondensationsreaktion eingehen. Die beiden Komponenten des Zweikomponentenklebstoffs können in zwei getrennten Behältnissen aufbewahrt werden. Alternativ kann für beide Komponenten ein Behältnis verwendet werden, das zwei getrennte Kammern aufweisen kann, wobei jeweils eine Komponente in einer Kammer gelagert ist.

Insbesondere, wenn das erfindungsgemäße Klebeset unterschiedliche Klebstoffe enthält, ist es sinnvoll, wenn das Klebeset mindestens ein weiteres Behältnis aufweist, das mindestens ein weiteres Klebstofflösemittel enthält.

Das Klebstofflösemittel und/oder das mindestens eine weitere Klebstofflösemittel kann insbesondere N-Methyl-2-pyrrolidon oder N,N-Dimethylformamid sein. Es zeigte sich, daß Klebstoffe, insbesondere die bisher als nahezu unlöslich angesehenen polymeren Cyanacrylatklebstoffe, durch N-Methyl-2-pyrrolidon (im folgenden kurz NMP genannt) oder durch N,N-Dimethylformamid (im folgenden kurz DMF genannt) lösbar sind und daß gleichzeitig ein weit verbreiteter, aber äußerst empfindlicher Kunststoff wie Acrylglas relativ beständig gegen NMP und DMF ist. Da die beiden Substanzen wasserlöslich und fettlösend sind, eigenen sie sich besonders gut für die Reinigung der zu verklebenden Teile vor dem eigentlichen Klebevorgang. Auf diese Weise können Kunststoffoberflächen wie Polymethylmethacrylatoberflächen, Metall-, Glas-, Keramik- und Steinoberflächen gereinigt werden. Außerdem geeignet können aber auch andere Lactame oder N,N-Dialkylamide sein. Daneben können verschiedene Lactone, wie Betabutyrolacton, Gammabutyrolacton oder Caprolactone, oder andere bekannte Klebstofflösemittel wie Dialkylketone oder Carbonsäureester eingesetzt werden.

Es ist generell besonders vorteilhaft, ein Klebstofflösemittel einzusetzen, das neben dem Lösen des Klebstoffs auch reinigende Wirkung auf eine Vielzahl organischer Rückstände in Geweben und auf Oberflächen unterschiedlichen Materials besitzt, da es in diesem Fall auch als Fleckenentferner für Flecken organischer Herkunft verwendet werden.

Eine weitere besonders vorteilhafte Weiterbildung der Erfindung sieht vor, daß das Klebeset ein weiteres Behältnis aufweist, das einen Füllstoff enthält. Dieser Füllstoff kann zum Füllen von Löchern und zum Ausgleichen von Unebenheiten verwendet werden. Zusammen mit dem Klebstoff kann er eine feste, insbesondere mechanisch zu verarbeitende Verbindung eingehen. Ein solcher Füllstoff ist beispielsweise eine Glasmasse oder eine ähnliche anorganische Verbindung, die in einem fein verteilten Zustand verarbeitet wird. Außerdem können Kunststoffgranulate als Füllstoff eingesetzt werden.

Um zu gewährleisten, daß sich der Inhalt von mindestens zwei Behältnissen immer am gleichen Ort befinden und die Behältnisse nicht getrennt voneinander abgelegt werden, können diese mindestens zwei Behältnisse einstückig ausgebildet sein.

Um eine höhere Flexibilität zu schaffen, können mindestens zwei Behältnisse auch derart ausgebildet sein, daß sie direkt oder über mindestens ein Verbindungselement miteinander, insbesondere durch eine Steckverbindung und/oder durch eine Magnetverbindung und/oder eine Schraubenverbindung und/oder eine Klettverbindung, verbindbar sind. Durch eine solche Verbindungsmöglichkeit wird ein überaus flexibles System geschaffen, das es dem Benutzer erlaubt, sich ein für eine bestimmte Anwendung optimiertes Kit selbst zusammenzustellen. Er kann beispielsweise aus einer größeren Anzahl von Behältnissen, die zu dem Klebeset gehören, diejenigen heraussuchen, deren Inhalt für seine geplante Anwendung interessant sind und kann diese, insbesondere über ein Verbindungselement, miteinander verbinden und so in eine Gebrauchsstellung überführen. Die resultierende Anordnung ist besonders übersichtlich und kann leicht transportiert werden, ohne daß einer der benötigten Behältnisse vergessen oder verlegt wird.

Eine Ausgestaltung der Erfindung mit einer besonders zweckmäßigen solchen Anordnung sieht vor, daß mindestens zwei Behältnisse jeweils einen Längsverlauf mit einer ersten und einer zweiten Endung aufweisen, wobei die ersten Endungen an die Verschlußelemente angrenzen, wobei die zweiten Endungen der mindestens zwei Behältnisse in einer Gebrauchsstellung der mindestens zwei Behältnisse einen Kern bilden, von dem aus die mindestens zwei Behältnisse strahlenförmig herausragen. Durch Drehen dieser Anordnung kann jeweils ein Verschlußelement und damit auch eine Öffnung eines Behältnisses in eine Position gebracht werden, die sich besonders gut für die Entnahme des Inhalts eignet. Nach Abnahme eines Verschlußelementes kann der Inhalt entweder direkt oder über ein Auslaufsystem ausgeführt werden. Bei nur zwei Behältnissen kann die Anordnung aus einem Stift bestehen, wobei an einem Stiftende der Inhalt eines Behältnisses und an dem anderen Stiftende der Inhalt eines anderen Behältnisses entnommen werden kann.

Die Längsverläufe der mindestens zwei Behältnisse können beispielsweise Winkel von mindestens 30° einschließen, so daß der Inhalt eines Behältnisses entnommen werden kann, ohne daß dabei ein anderes Behältnis durch seine räumliche Anordnung behindernd wirkt. Beispielsweise können die Behältnisse so angeordnet sein, daß die Verschlußelemente Ecken einer imaginären Pyramide bilden. In einer weiteren Alternative können die Behältnisse so positioniert sein, daß ihre Verschlußelemente die Spitzen eines imaginären Sterns bilden.

Insbesondere für die Aufbewahrung ist es zweckmäßig, wenn die Längsverläufe der mindestens zwei Behältnisse in einer Ebene angeordnet sind und so die gesamte Anordnung nicht viel Raum einnimmt.

In einer weiteren besonders vorteilhaften Weiterbildung der Erfindung weist das Klebeset ein Gefäß auf, wobei mindestens zwei Behältnisse in einer Aufbewahrungsstellung und/oder in einer Gebrauchsstellung mindestens zum Teil innerhalb des Gefäßes angeordnet sind. Das Gefäß kann beispielsweise zylinderförmig, würfelförmig oder oktaederförmig sein. Mindestens eines der Behältnisse kann zur Überführung von der Aufbewahrungsstellung in die Gebrauchsstellung zumindest teilweise aus diesem Gefäß, insbesondere in Richtung des Verschlußelementes, ausführbar sein, um den Inhalt besser entnehmen zu können. Vorteilhafterweise bleibt dabei ein Teil des Behältnisses innerhalb des Gefäßes. Dies kann insbesondere durch eine Verankerung des Behältnisses innerhalb des Gefäßes gewährleistet werden.

Weitere Vorteile und Ausgestaltungen der Erfindung gehen aus den im folgenden anhand von Zeichnungen beschriebenen Ausführungsformen hervor.

Es zeigen
- Fig. 1: eine schematische Darstellung einer ersten Ausführungsform eines erfindungsgemäßen Klebesets; und
- Fig. 2: eine geschnittene schematische Darstellung einer weiteren Ausführungsform eines erfindungsgemäßen Klebesets.

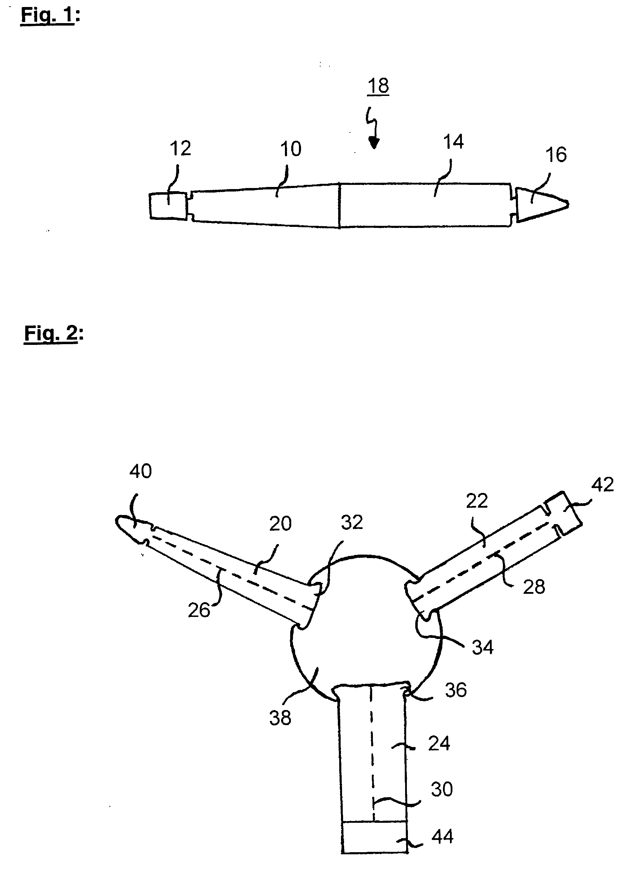

In Fig. 1 ist eine erste Ausführungsform des erfindungsgemäßen Klebesets dargestellt. Ein erstes Behältnis 10 mit einem ersten Verschlußelement 12 enthält einen Klebstoff und ein zweites Behältnis 14 mit einem zweiten Verschlußelement 16 beinhaltet ein Klebstofflösemittel. Die beiden Behältnisse 10 und 14 sind einstückig ausgebildet und bilden eine Art Stift 18. Während der Klebstoff durch leichten Druck auf das erste Behältnis 10 entnommen werden kann, kann das Klebstofflösemittel bei entsprechender Position des Stiftes 18 aus dem zweiten Behältnis 14 heraustropfen. Diese Ausführungsform kann durch eine entsprechende Anordnung weiterer Behältnisse zu einem sogenannten Klebestern erweitert werden.

Fig. 2 zeigt einen Querschnitt durch eine weitere Ausführungsform des erfindungsgemäßen Klebesets, die ein Beispiel für einen Klebestern darstellt. Die drei Behältnisse 20, 22 und 24 weisen Längsverläufe 26, 28 und 30 auf, deren Endungen 32, 34 und 36 zusammen mit einem Verbindungselement 38 einen zentralen Kern bilden. Die Behältnisse 20, 22 und 24 ragen strahlenförmig aus dem zentralen Kern heraus und Verschlußelemente 40, 42 und 44 der Behältnisse 20, 22 und 24 bilden Spitzen des Klebesterns. Die Endungen 32, 34 und 36 sind durch Steckverbindungen mit dem Verbindungselement 38 verbunden. Ein Klebestern kann mehr als die drei dargestellten Behältnisse 20, 22, 24 und damit auch mehr als drei Spitzen aufweisen, wenn das Verbindungselement 38 entsprechende Verbindungsmöglichkeiten zu weiteren Behältnissen vorsieht. Nimmt man die Verschlußelemente 40, 42 und 44 ab, so kann der Inhalt der Behältnisse 20, 22 und 24 direkt oder über ein Auslaufsystem entleert werden. Dabei ist unter einem Auslaufsystem insbesondere ein Dosiersystem zu verstehen, durch das eine Substanz beispielsweise durch die Wirkung der Schwerkraft und/oder von Kapillarkräften in einer ganz bestimmten Dosierung aus einem Behältnis ausgelassen werden kann. Darunter fallen Faserstifte, Kapillarspitzen und zahlreiche Systeme, die insbesondere aus dem Bereich der Medizin bekannt sind.

In einer weiteren nicht dargestellten Ausführungsform sind mehrere Behältnisse ebenfalls über ein Verbindungselement verbunden, wobei abnehmbare Verschlußelemente der Behältnisse Ecken einer imaginären Pyramide oder eines imaginären Tetraeders bilden. Wird bei der zweiten Alternative eine Substanz aus einem Behältnis verwendet, kann das erfindungsgemäße Klebeset zwischendurch bequem in einer Stellung abgestellt werden, bei der das verwendete Behältnis nach oben steht und deshalb auch geöffnet bleiben kann und die drei restlichen Behältnisse nach unten zeigen und mit ihren Verschlußelementen einen stabilen Stand sichern. Der Inhalt der Behältnisse kann direkt oder über ein Auslaufsystem entleert werden.

In einer weiteren nicht dargestellten Ausführungsform des erfindungsgemäßen Klebesets sind bis zu fünf Behältnisse im Inneren eines zylindrischen Gefäßes getrennt eingebaut. Die Behältnisse können einzeln aus dem Gefäß herausgezogen werden. Sie sind jedoch mit dem Gefäß so verbunden, daß sie nur nach einer Entriegelung vollständig aus dem Gefäß herausgenommen werden können. Die Behältnisse haben abnehmbare Verschlußelemente, die abgenommen werden, um den Inhalt der Behältnisse über Seiten des Zylinders direkt oder über ein Auslaufsystem zu entleeren. Das Gefäß weist eine geringere Längenausdehnung auf als die Behältnisse, so daß diese aus dem Gefäß herausragen.

In einer alternativen Ausführungsform kann das Gefäß eine sechseckige Grundfläche aufweisen und sich von dieser Grundfläche aus zylinderförmig erstrecken, dabei kann ein Ende des Gefäßes mit einem Verschluß zum Öffnen und Schließen versehen sein. Das Gefäß kann bis zu sechs Behältnisse aufnehmen, welche wiederum einzeln zur Entnahme des Inhalts aus dem Gefäß herausgezogen werden können.

In einer weiteren Ausführungsform des erfindungsgemäßen Klebesets sind mehrere Behältnisse im Inneren eines Würfels oder eines Oktaeders getrennt eingebaut, wobei Eckkanten oder Seiten des Würfels oder des Oktaeders geöffnet werden können, um die Behältnisse einzeln herauszuziehen. Die Verschlußelemente der Behältnisse können einerseits durch die Seiten oder Eckkanten des Würfels oder des Oktaeders gebildet werden oder auch zusätzlich ausgebildet sein. Nimmt man die Verschlußelemente ab, wird der Inhalt der Behältnisse direkt oder über ein Auslaufsystem entleert.

In einer weiteren Ausführungsform des erfindungsgemäßen Klebesets befinden sich die Behältnisse in Löchern einer Kugel und können zur Benutzung zumindest teilweise aus den Löchern herausgezogen werden.

Die Behältnisse der beschriebenen Ausführungsformen enthalten in jedem Fall mindestens einen Klebstoff und mindestens ein Klebstofflösemittel. Als Klebstoff kann vor allem ein chemisch abbindender Einkomponentenklebstoff eingesetzt werden, insbesondere ein Cyanacrylatklebstoff. Daneben kann ein physikalisch abbindenden Einkomponentenklebstoff verwendet werden, insbesondere Leim, Kleister oder ein Dispersionsklebstoff. Geeignet ist ebenfalls ein Zweikomponentenklebstoff, insbesondere aus der Gruppe der Epoxidharze oder ein Aminoplast- oder Phenoplastklebstoff.

Als Klebstofflösemittel ist in den obigen Ausführungsformen insbesondere ein Lösemittel, das Cyanacrylatklebstoff löst, vorgesehen wie beispielsweise NMP oder DMF. Das verwendete Klebstofflösemittel besitzt auch eine reinigende Wirkung auf eine Vielzahl organischer Rückstände in Geweben oder auf Oberflächen.

Die Behältnisse der oben beschriebenen Ausführungsformen können auch Füllstoffe enthalten, wobei ein solcher Füllstoff zusammen mit einem Klebstoff, insbesondere Cyanacrylatklebstoff, eine feste, mechanisch zu verarbeitende Verbindung eingeht.

Weitere Veränderungen, Modifikationen oder Kombinationen der oben beschriebenen Ausführungsformen sind für den Fachmann offensichtlich und fallen ebenso unter den Schutzumfang der beigefügten Ansprüche.

## Patentansprüche

1. Klebeset, das mindestens zwei Behältnisse (10, 14; 20, 22, 24) mit Verschlußelementen (12, 16; 40, 42, 44) aufweist, wobei mindestens ein Behältnis einen Klebstoff enthält und wobei mindestens ein weiteres Behältnis ein Klebstofflösemittel enthält.

2. Klebeset nach Anspruch 1,
dadurch gekennzeichnet,
daß das Klebeset mindestens ein weiteres Behältnis aufweist, das mindestens einen weiteren Klebstoff enthält.

3. Klebeset nach einem der vorhergehenden Ansprüche,
dadurch gekennzeichnet,
daß der Klebstoff und/oder der mindestens eine weitere Klebstoff ein Einkomponentenklebstoff ist.

4. Klebeset nach einem der vorhergehenden Ansprüche,
dadurch gekennzeichnet,
daß der Klebstoff und/oder der mindestens eine weitere Klebstoff ein physikalisch abbindender Klebstoff, insbesondere ein Leim oder ein Kleister oder ein Dispersionsklebstoff, oder ein chemisch abbindender Klebstoff, insbesondere ein Cyanacrylatklebstoff, ist.

5. Klebeset nach einem der vorhergehenden Ansprüche,
dadurch gekennzeichnet,
daß der Klebstoff und/oder der mindestens eine weitere Klebstoff mindestens eine Komponente eines Zweikomponentenklebstoffs ist.

6. Klebeset nach einem der vorhergehenden Ansprüche,
dadurch gekennzeichnet,
daß das Klebeset mindestens ein weiteres Behältnis aufweist, das mindestens ein weiteres Klebstofflösemittel enthält.

7. Klebeset nach einem der vorhergehenden Ansprüche,
dadurch gekennzeichnet,
daß das Klebstofflösemittel und/oder das mindestens eine weitere Klebstofflösemittel N-Methyl-2-pyrrolidon oder N,N-Dimethylformamid ist.

8. Klebeset nach einem der vorhergehenden Ansprüche,
dadurch gekennzeichnet,
daß das Klebeset mindestens ein weiteres Behältnis aufweist, das einen Füllstoff enthält.

9. Klebeset nach einem der vorhergehenden Ansprüche,
dadurch gekennzeichnet,
daß mindestens zwei Behältnisse (10, 14) einstückig ausgebildet sind.

10. Klebeset nach einem der vorhergehenden Ansprüche,
dadurch gekennzeichnet,
daß mindestens zwei Behältnisse (20, 22, 24) derart ausgebildet sind, daß sie direkt oder über mindestens ein Verbindungselement (38) miteinander, insbesondere durch eine Steckverbindung und/oder durch eine Magnetverbindung und/oder durch eine Schraubenverbindung und/oder durch eine Klettverbindung, verbindbar sind.

11. Klebeset nach einem der vorhergehenden Ansprüche,
dadurch gekennzeichnet,
daß mindestens zwei Behältnisse (20, 22, 24) jeweils einen Längsverlauf (26, 28, 30) mit einer ersten und einer zweiten Endung (32, 34, 36) aufweisen, wobei die ersten Endungen an die Verschlußelemente (40, 42, 44) angrenzen, wobei die zweiten Endungen (32, 34, 36) der mindestens zwei Behältnisse (20, 22, 24) in einer Gebrauchsstellung der mindestens zwei Behältnisse (20, 22, 24) einen Kern bilden, von dem aus die mindestens zwei Behältnisse (20, 22, 24) strahlenförmig herausragen.

12. Klebeset nach Anspruch 11,
dadurch gekennzeichnet,
daß die Längsverläufe (26, 28, 30) der mindestens zwei Behältnisse (20, 22, 24) Winkel von mindestens 30° einschließen.

13. Klebeset nach einem der Ansprüche 11 oder 12,
dadurch gekennzeichnet,
daß die Längsverläufe (26, 28, 30) der mindestens zwei Behältnisse (20, 22, 24) in einer Ebene angeordnet sind.

14. Klebeset nach einem der vorhergehenden Ansprüche,
dadurch gekennzeichnet,
daß das Klebeset ein Gefäß aufweist, wobei mindestens zwei Behältnisse in einer Aufbewahrungsstellung und/oder in einer Gebrauchstellung mindestens zum Teil innerhalb des Gefäßes angeordnet sind.

15. Klebeset nach Anspruch 14,
dadurch gekennzeichnet,
daß mindestens eines der Behältnisse zur Überführung von der Aufbewahrungsstellung in die Gebrauchsstellung zumindest teilweise aus dem Gefäß, insbesondere in Richtung des Verschlußelementes, ausführbar ist.
